(19) 

Europäisches
Patentamt
European
Patent Office
Office européen
des brevets

(11) **EP 4 641 658 A1**

(12) **EUROPEAN PATENT APPLICATION**
published in accordance with Art. 153(4) EPC

(43) Date of publication:
**29.10.2025 Bulletin 2025/44**

(21) Application number: **24854367.0**

(22) Date of filing: **05.08.2024**

(51) International Patent Classification (IPC):
$H01M\ 4/133^{(2010.01)}$ $\quad H01M\ 4/131^{(2010.01)}$
$H01M\ 4/1393^{(2010.01)}$ $\quad H01M\ 4/1391^{(2010.01)}$
$H01M\ 4/587^{(2010.01)}$ $\quad H01M\ 4/48^{(2010.01)}$
$H01M\ 4/38^{(2006.01)}$ $\quad H01M\ 10/052^{(2010.01)}$
$H01M\ 10/0583^{(2010.01)}$ $\quad H01M\ 10/0585^{(2010.01)}$

(52) Cooperative Patent Classification (CPC):
**H01M 4/02; H01M 4/131; H01M 4/133;**
**H01M 4/1391; H01M 4/1393; H01M 4/38;**
**H01M 4/48; H01M 4/587; H01M 10/052;**
**H01M 10/0583; H01M 10/0585;** Y02E 60/10

(86) International application number:
**PCT/KR2024/011507**

(87) International publication number:
**WO 2025/037815 (20.02.2025 Gazette 2025/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.08.2023 KR 20230105352**

(71) Applicant: **LG Energy Solution, Ltd.**
**Seoul 07335 (KR)**

(72) Inventors:
• **NOH, Suk In**
 **Daejeon 34122 (KR)**
• **KIM, Ji Hyun**
 **Daejeon 34122 (KR)**

(74) Representative: **BCKIP Part mbB**
**MK1**
**Landsbergerstraße 98, 3.Stock**
**80339 München (DE)**

(54) **NEGATIVE ELECTRODE FOR LITHIUM SECONDARY BATTERY AND METHOD FOR MANUFACTURING SAME**

(57) A negative electrode may include a two-layer structure negative electrode active layer on a negative electrode current collector. The second negative electrode active layer may be an upper layer, may include a carbon-based negative electrode active material and a silicon-based negative electrode active material in a predetermined content ratio, and may have a high charge and discharge capacity by adjusting an orientation index (O.I) of the first negative electrode active layer., The first negative electrode active layer may be a lower layer and may have a ratio $(O.I_{1st}/O.I_{2nd})$ of the first negative electrode active layer and the second negative electrode active layer to a predetermined range. In addition, a lithium secondary battery comprising the same may have the advantage of having excellent output characteristics and can be charged in a short time even at a 1C-rate.

EP 4 641 658 A1

**Description**

[Technical Field]

The present disclosure relates to a negative electrode for a lithium secondary battery and a manufacturing method thereof.

This application claims the benefit of priority based on Korean Patent Application No. 10-2023-0105352, filed on August 11, 2023, and the entire contents of the Korean patent application are incorporated herein by reference.

[Background]

Recently, secondary batteries have been widely applied not only in small devices, such as portable electronics, but also in medium and large devices, such as battery packs or power storage devices in hybrid or electric vehicles. In particular, as interest in environmental issues has increased in recent years, there has been a lot of research on electric vehicles, hybrid electric vehicles, etc. that can replace vehicles that use fossil fuels, such as gasoline vehicles and diesel vehicles, etc., which are the main cause of air pollution.

Conventional lithium secondary batteries are limited in application to short-range electric vehicles due to limitations in energy density. Accordingly, until now, technology has been intensively developed in the direction of increasing the energy density of lithium secondary batteries.

However, the developed lithium secondary batteries for automobiles have the issue of requiring a long time to charge after discharging during vehicle operation. Therefore, as the adoption rate of electric vehicles increases, there is a growing need to shorten the charging time to a level that is acceptable to users.

Meanwhile, a lithium secondary battery is a power generating device that can be charged and discharged by a stacked structure of a positive electrode, a separator, and a negative electrode. When a lithium secondary battery is charged, a lithium dissociation reaction is induced at the positive electrode inside the battery, in which lithium contained in the positive electrode active material is oxidized and released, and a lithium insertion reaction occurs at the negative electrode, in which lithium is reduced and goes into the negative electrode active material. Generally, the dissociation reaction in the positive electrode active material is faster than the insertion reaction in the negative electrode active material, thereby the rapid charge and discharge performance of the lithium secondary battery is mainly determined by the negative electrode.

As a negative electrode active material, materials containing graphite are widely used. The average potential when materials containing graphite release lithium is approximately 0.2 V (based on Li/Li$^+$), and the discharge potential shows a relatively flat pattern. Because of this, when graphite is used as a negative electrode active material, the voltage of the secondary battery is high and has certain advantages. However, the electrical capacity per unit mass of graphite material is 372 mAh/g, which is small. However, the current capacity of graphite materials has been improved close to the above theoretical capacity, so it is difficult to further increase the capacity. In addition, when graphite is used as a negative electrode active material, the insertion reaction of lithium ions proceeds at a slow speed, so there is a limitation of low rapid charging performance compared to the case of applying other negative electrode active materials.

Therefore, in order to improve the high capacity and rapid charging performance of lithium secondary batteries, a variety of negative electrode active materials have been researched. For example, silicon has been found to be capable of reversibly adsorbing and releasing large amounts of lithium through compound formation reaction with lithium, and a lot of research on this has been conducted recently. Silicon has a theoretical maximum capacity of approximately 4020 mAh/g (9800 mAh/cc, specific gravity 2.23), which is significantly larger than that of graphitic-based materials, and thus has useful advantages as a high-energy density and/or high-capacity negative electrode material. However, silicon induces large volume changes (~300%) during charging and discharging, as well as does not have high-rate discharge characteristics, and thus has limitations in that the lifespan and rapid discharge efficiency of lithium secondary batteries including the silicon are not high.

Therefore, in order to fundamentally solve such problems, there is a high need for negative electrode technology that can simultaneously implement high rapid charge and discharge performance and lifespan characteristics while improving charge and discharge capacity.

[Summary]

[Technical Problem]

An object of the present disclosure is to provide a negative electrode for lithium secondary battery having improved rapid charge and discharge performance, enabling charging of the secondary battery in a short time, having a high charge and discharge capacity, and exhibiting excellent lifespan characteristics, and a manufacturing method thereof.

[Technical Solution]

To solve the problems described above,

The present disclosure provides a negative electrode comprising,

a negative electrode current collector,
a first negative electrode active layer provided on at least one side of the negative electrode current collector and including a first carbon-based negative electrode active material, and
a second negative electrode active layer provided on the first negative electrode active layer and including a second carbon-based negative electrode active material and a silicon-based negative electrode active material;
wherein the first negative electrode active layer having an orientation index ($O.I_{1st}$) in a range from 5 to 15 according to the following equation 1, and
satisfies the following equation 2 in a range from 0.2 to 0.6:

$$[\text{Equation 1}]$$

$$O.I = I_{004}/I_{110}$$

$$[\text{Equation 2}]$$

$$O.I_{1st}/O.I_{2nd}$$

in Equation 1 and Equation 2,

$I_{004}$ indicates the area of the peak representing the (004) crystal surface of a carbon-based negative electrode active material in an X-ray diffraction spectroscopy (XRD) analysis of the negative electrode active layer,
$I_{110}$ indicates the area of the peak representing the (110) crystal surface of a carbon-based negative electrode active material in an X-ray diffraction spectroscopy (XRD) analysis of the negative electrode active layer.
$O.I_{1st}$ indicates an orientation index of the first carbon-based negative electrode active material contained in the first negative electrode active layer,
$O.I_{2nd}$ indicates an orientation index of a second carbon-based negative electrode active material contained in the second negative electrode active layer.

In this case, the silicon-based negative electrode active material may be included from 1 wt.% to 25 wt.% based on the weight of the second negative electrode active layer.

In addition, the first negative electrode active layer may have an orientation index (O.I) in the range of 7 to 12.

Moreover, the carbon-based negative electrode active material may include one or more types of natural graphite and artificial graphite, respectively.

In addition, the silicon-based negative electrode active material may include one or more types of silicon (Si), silicon carbide (SiC), and silicon oxide ($SiO_q$, wherein $0.8 \leq q \leq 2.5$).

Further, the total thickness of the first negative electrode active layer and the second negative electrode active layer may be in the range of $50\mu m$ to $500\mu m$.

In addition, the present disclosure provides a method of manufacturing a negative electrode according to the present disclosure, comprising:

applying a negative electrode slurry to at least one side of a negative electrode current collector;
applying magnetic field to the applied negative electrode slurry; and
drying the negative electrode slurry to which the magnetic field is applied to form a negative electrode active layer.

In this case, the step of applying the magnetic field may be performed for a duration of 1 second to 20 seconds.

In addition, the step of applying the magnetic field may be performed with a magnetic field strength in the range of 1,000 G to 7,000 G.

Further, the present disclosure provides a lithium secondary battery including,

an electrode assembly including a positive electrode, a negative electrode according to the present disclosure, and a separator disposed between the positive electrode and the negative electrode; and
an electrolyte composition with which the electrode assembly is impregnated.

The positive electrode may include a positive electrode active layer provided on at least one side of the positive electrode current collector and including one or more types of the lithium metal oxides represented by the following chemical formula 1 and chemical formula 2:

[Chemical formula 1]        $Li_x[Ni_yCo_zMn_wM^1_v]O_2$

[Chemical formula 2]        $LiM^2_pMn_{2-p}O_4$

in the above Chemical Formula 1 and Chemical formula 2,

$M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, or Mo.
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,
$M^2$ is Ni, Co or Fe.
p is $0.05 \leq p \leq 1.0$.

Specifically, the positive electrode active layer may comprise a positive electrode active material which may comprise one or more types of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.
In addition, the electrode assembly may be a stack-type electrode assembly; a zigzag-type electrode assembly; or a zigzag-stack-type electrode assembly.

[Advantageous Effects]

The negative electrode for lithium secondary battery according to one aspect of the present disclosure has the characteristics of high charge and discharge capacity as well as excellent lifespan characteristics. In addition, the lithium secondary battery comprising the same has the advantage of having excellent output characteristics and can be charged in a short time even at a 1C-rate.

[Detailed Description]

The present disclosure may have various modifications and various aspects, and thus specific aspects thereof will be described in detail below.
However, it should be understood that the present disclosure is not limited to the specific aspects, and includes all modifications, equivalents, or alternatives within the spirit and technical scope of the present disclosure.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.
In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.
In addition, in the present disclosure, "including as a major component" can mean including at least 50 wt.% (or at least 50 vol.%), at least 60 wt.% (or at least 60 vol.%), at least 70 wt.% (or at least 70 vol.%), at least 80 wt.% (or at least 80 vol.%), at least 90 wt.% (or at least 90 vol.%), or at least 95 wt.% (or at least 95 vol.%) of a defined component relative to the total weight (or total volume) of the negative electrode active material. For example, "comprising graphite as a primary component as a negative electrode active material" may mean including at least 50 wt.%, at least 60 wt.%, at least 70 wt.%, at least 80 wt.%, at least 90 wt.%, or at least 95 wt.% of graphite, based on the total weight of the negative electrode active material, and in some cases may mean that the entire negative electrode active material is graphite, comprising at least 100 wt.% of graphite.
Moreover, as used herein, "carbon-based negative electrode active material is oriented" or "carbon-based negative electrode active material is aligned" means that certain crystal surfaces (e.g., ab-axis crystal surfaces of graphite) representing the two-dimensional plane structure of the carbon-based negative electrode active material comprising the negative electrode active material particles are arranged to have a predetermined slope based on the surface of the negative electrode current collector, which may differ from the carbon-based negative electrode active material particles themselves being arranged to have a specific direction within the negative electrode active layer.

Further, "highly oriented carbon-based negative electrode active material" may mean that a particular crystal surface (e.g., an ab-axis crystal surface of graphite) representing a two-dimensional planar structure of the carbon-based negative electrode active material contained in the negative electrode active layer has a predetermined slope based on the surface of the negative electrode current collector. In addition, in some cases, it may mean that the crystal surfaces of the carbon-based negative electrode active material contained in the negative electrode active layer are arranged at a high angle (e.g., a near vertical angle, greater than 45°; more specifically, greater than 60°) based on the surface of the negative electrode current collector.

In addition, " high orientation index (O.I) of the carbon-based negative electrode active material" may mean that the "orientation index (O.I)" referred to herein has a large value, such that certain crystal surfaces (e.g., ab-axis crystal surfaces of graphite) representing a two-dimensional plane structure of the carbon-based negative electrode active material contained in the negative electrode active layer are arranged at a low angle (e.g., less than 45°) based on the surface of the negative electrode current collector. Conversely, "low orientation index (O.I) of the carbon-based negative electrode active material" may mean that the "orientation index (O.I)" has a small value, such that the crystal surface of the carbon-based negative electrode active material contained in the negative electrode active layer is arranged at a high angle (e.g., a near vertical angle, 45° or more; specifically, 60° or more) based on the surface of the negative electrode current collector.

Further, as used herein, the term "crystal surface of the carbon-based negative electrode active material" may refer to a surface on which the atoms of the carbon-based negative electrode active material form the shape of a crystal, which in the present disclosure may mean a crystal surface comprising a plane of the carbon-based negative electrode active material, or a crystal surface comprising the a-axis/b-axis/ab-axis of the carbon-based negative electrode active material crystal.

In addition, as used herein, "average particle diameter ($D_{50}$)" refers to the particle diameter at which the sum value of the particle diameter distribution of the particles is 50%, which is also referred to as the median diameter. The average particle diameter may be measured in methods conventionally known in the art. For example, the average particle diameter can be measured using a particle size analyzer or an analyzer based on laser diffraction particle size distribution measurement.

Hereinafter, the present disclosure will be described in more detail.

## Negative electrode for lithium secondary battery

The present disclosure provides a negative electrode for lithium secondary battery comprising,

a negative electrode current collector,
a first negative electrode active layer provided on at least one side of the negative electrode current collector and including a first carbon-based negative electrode active material, and
a second negative electrode active layer provided on the first negative electrode active layer and including a second carbon-based negative electrode active material and a silicon-based negative electrode active material;
wherein the first negative electrode active layer having an orientation index ($O.I_{1st}$) in a range from 5 to 15 according to the following equation 1, and
satisfies the following equation 2 in a range from 0.2 to 0.6:

$$[\text{Equation 1}]$$

$$O.I = I_{004}/I_{110}$$

$$[\text{Equation 2}]$$

$$O.I_{1st}/O.I_{2nd}$$

in Equation 1 and Equation 2,

$I_{004}$ indicates the area of the peak representing the (004) crystal surface of a carbon-based negative electrode active material in an X-ray diffraction spectroscopy (XRD) analysis of the negative electrode active layer,

$I_{110}$ indicates the area of the peak representing the (110) crystal surface of a carbon-based negative electrode active material in an X-ray diffraction spectroscopy (XRD) analysis of the negative electrode active layer.

$O.I_{1st}$ indicates an orientation index of the first carbon-based negative electrode active material contained in the first negative electrode active layer,

$O.I_{2nd}$ indicates an orientation index of a second carbon-based negative electrode active material contained in the second negative electrode active layer.

A negative electrode for a lithium secondary battery according to one aspect of the present disclosure includes a negative electrode active layer on at least one side of the negative electrode current collector. The negative electrode active layer is a layer that implements the electrical activity of the negative electrode and includes as a main component a negative electrode active material that implements an electrochemical oxidation-reduction reaction during charging and discharging of the battery. The negative electrode active material includes a carbon-based negative electrode active material and a silicon-based negative electrode active material.

Here, the carbon-based negative electrode active material refers to a material having carbon atoms as a main component. Such carbon-based negative electrode active material may include graphite.

The graphite may include any one or more of natural graphite or artificial graphite. In addition, the graphite may further include, in addition to natural graphite and artificial graphite, mesophase calcined carbon (bulk mesophase) derived from tar and pitch, graphitized coke (raw coke, green coke, pitch coke, needle coke, petroleum coke, etc.), and the like.

For example, the negative electrode active layer according to one aspect of the present disclosure may include artificial graphite alone.

The present disclosure includes artificial graphite alone in the negative electrode active layer, which significantly improves the lifespan of the negative electrode, which can be advantageous in conditions where frequent charging should be endured for a long time, such as in automobile batteries. Moreover, compared to natural graphite, artificial graphite has the advantage of being favorable for rapid charging and having excellent output performance.

In addition, the negative electrode active layer according to one aspect of the present disclosure may include natural graphite and artificial graphite together, in which case the mixing ratio of natural graphite and artificial graphite may be 5%-50%:50%-95%, 20%-45%:55%-80%, or 5%-15%:85%-95% based on the weight. The present disclosure can maintain a high rapid charging speed and output performance by including natural graphite and artificial graphite together in the negative electrode active layer in the above content ratios.

In addition, the carbon-based negative electrode active material may have a rounded particle shape, respectively, rather than a shape such as a plate shape, a sheet shape, a flake shape, an acicular shape, or the like. Here, a rounded particle shape may refer to a particle having a non-angular shape. Such particles may be spherical or ellipsoid in shape when cross-sectional structure analysis is performed or when projected as a two-dimensional particle, and in some cases may be shapelessness where the shape is difficult to define.

For example, the carbon-based negative electrode active material may be graphite having a spherical particle shape. In this case, the spherical particles may be processed to have a spherical shape/form during manufacture or may be an assembly of a spherical flake graphite formed by an aggregation of a plurality of flake graphite. If the spherical particles are assemblies, one graphite assembly may be formed by an aggregation of 2 to 100, preferably 3 to 20, of flake graphite. The present disclosure can further increase the electrical conductivity of the negative electrode active layer by controlling the shape of the carbon-based negative electrode active material as described above and can improve the adhesion between the negative electrode active layer and the negative electrode current collector by maximizing the contact area with the negative electrode current collector.

In addition, the carbon-based negative electrode active material may be an ellipsoid. In this case, the carbon-based negative electrode active material can be more easily secured as a transport path for lithium ions in the negative electrode active layer, thereby enabling charging to be completed in a shorter time even if charging is performed under the same conditions.

In addition, the carbon-based negative electrode active material may be adjusted in size to a certain range. Specifically, the average particle diameter ($D_{50}$) of the carbon-based negative electrode active material may be in the range of 1μm to 30μm, and specifically 1μm to 20μm; 1μm to 15μm; 1μm to 10μm; 1μm μm to 8μm; 1μm to 5μm; 1μm to 3μm; 10μm to 20μm; 11μm to 19μm; 8μm to 15μm; 15μm to 20μm; 13μm μm to 19μm; 14μm to 17μm; 5μm to 8μm; 7μm to 14μm; 9μm to 13μm; 2μm to 6μm; 5μm to 9μm; 1μm to 4.5μm; or 1μm to 3μm.

The present disclosure can control the average particle diameter of the carbon-based negative electrode active material to the above range, thereby easily suppressing an increase in the electrical resistance of the negative electrode active layer. Additionally, in the above average particle diameter range, the carbon-based negative electrode active material can increase the specific surface area per unit weight while maximizing the degree of disorder in the expansion direction for each of the particles so as to prevent the expansion of the particles due to the charging of the lithium ions, thereby further increasing the adhesion between the negative electrode active layer and the negative electrode current collector. In addition, the carbon-based negative electrode active material has the advantage of securing a transport path for the lithium ions within the average particle diameter range, thereby further improving the rapid charging performance. However, when the carbon-based negative electrode active material has a particle diameter lower than the lower limit value of the average particle diameter ($D_{50}$), a large amount of binder is needed due to an increase in the number of particles per unit volume, and thus the electrical properties of the negative electrode active layer including them may be degraded. On the other hand, having a higher particle diameter exceeding the upper limit value of the above average particle diameter ($D_{50}$) may significantly increase the expansion rate of the negative electrode active material during charging and discharging of the secondary battery, so that the binding property of the negative electrode active material particles; and the binding property of the negative electrode active material particles and the negative electrode current collector may decrease as the charging and discharging are repeated, thereby significantly decreasing the cycling characteristics.

In addition, the silicon-based negative electrode active material refers to a material having silicon atoms as a main component. Such silicon-based negative electrode active materials include silicon (Si), silicon carbide (SiC), silicon monoxide (SiO), or silicon dioxide ($SiO_2$), etc., which may be included alone or in combination in the negative electrode active layer. When the silicon-based negative electrode active material, silicon monoxide (SiO) and silicon dioxide ($SiO_2$) are uniformly mixed or compounded and included in the negative electrode active layer, they may be represented as silicon oxide ($SiO_q$, wherein $0.8 \leq q \leq 2.5$).

Moreover, the silicon-based negative electrode active material may be doped or alloyed with Li, Mg, Al, Ca or Ti, etc. In addition, the silicon-based negative electrode active material may be surface treated with a carbon coating layer or the like on the surface for the purpose of suppressing volume expansion during charging when containing oxygen (O) while also improving the electrical conductivity of the negative electrode active material.

In addition, the silicon-based negative electrode active material may be adjusted for size in a certain range. Specifically, the average particle diameter ($D_{50}$) of the silicon-based negative electrode active material may be in the range of 0.5μm to 20μm, more specifically, 0.5 to 15μm; 0.5μm to 13μm; 0.5μm to 9μm; 0.5μm to 6μm; 0.5μm to 4μm; 0.5μm to 2μm; 9μm to 18μm; 10μm to 17μm; 7μm to 14μm; 14μm to 18μm; 12μm to 18μm; 11μm to 15μm; 4μm to 8μm; 4μm to 13μm; 5μm to 12μm; 7μm to 11μm; 1μm to 5μm; 3μm to 8μm; 1μm to 3μm; or 1μm to 2μm.

Meanwhile, the negative electrode active layer may have a two-layer structure in which a first negative electrode active layer and a second negative electrode active layer are sequentially stacked on the negative electrode current collector. Since the two-layer structure of the negative electrode active layer can easily control the composition of each layer, the performance of the negative electrode can be improved by controlling the type or content of the components contained in each layer according to a specific purpose, such as increasing the energy efficiency of the battery or improving the adhesion between the active layer and the current collector. For example, the negative electrode active layers may selectively include a silicon-based negative electrode active material having a high charge and discharge capacity of the battery only in the first negative electrode active layer that contacts the negative electrode current collector. In addition, the negative electrode active layer may selectively include a natural graphite or the like having a good adhesion as a negative electrode active material only in the first negative electrode active layer contacting the negative electrode current collector or may include a high content of a binder having a binding property of the components comprising the active layer.

The present disclosure includes a first carbon-based negative electrode active material in the first negative electrode active layer, and a second carbon-based negative electrode active material and a silicon-based negative electrode active material in the second negative electrode active layer.

In this case, the first carbon-based negative electrode active material and the second carbon-based negative electrode active material included in each negative electrode active layer may be the same or different in type and/or content.

The present disclosure may include a silicon-based negative electrode active material in the second negative electrode active layer adjacent to the positive electrode active layer to increase the charge and discharge capacity of the negative electrode. In addition, by including the silicon-based negative electrode active material in a second negative electrode active layer that is not adjacent to the negative electrode current collector, the present disclosure can prevent a problem of lowering the adhesion between the negative electrode active layer and the negative electrode current collector due to a change in the volume of the silicon-based negative electrode active material during charging and discharging of the secondary battery. Further, the silicon-based negative electrode active material may be implemented such that the orientation index ($O.I_{1st}$) of the first negative electrode active layer is relatively lower than the orientation index ($O.I_{2nd}$) of the second negative electrode active layer. Such a tendency of the orientation index within the overall negative electrode active layer can significantly increase the lithium mobility within the negative electrode active layer, which has the advantage of providing a good initial lithium migration rate during charging and discharging, thereby shortening the charging and discharging time of the secondary battery at a low C-rate.

The silicon-based negative electrode active material may be included in an amount from 1 wt.% to 25 wt.% based on the overall weight of the total negative electrode active material included in the second negative electrode active layer. Specifically, the silicon-based negative electrode active material may be 5 wt.% to 25 wt.%; 9 wt.% to 23 wt.%; 10 wt.% to 20 wt.%; 8 wt.% to 18 wt.%; 5 wt.% to 15 wt.%; 8 wt.% to 13 wt.%; 11 wt.% to 23 wt.%; 15 wt.% to 20 wt.%; 11 wt.% to 19 wt.%; 19 wt.% to 25 wt.%; or 18 wt.% to 23 wt.% based on the overall weight of the total negative electrode active material. The present disclosure can adjust the content ratio of the silicon-based negative electrode active material in the negative electrode active material to the above range, thereby minimizing the volume change rate due to the silicon-based negative electrode active material during charging and discharging, and thus maintaining the lithium transport path of the carbon-based negative electrode active material implemented in the negative electrode active layer because of the application of a magnetic field. Accordingly, the negative electrode according to one aspect of the present disclosure can significantly improve the lifespan characteristics while implementing a high charge capacity and can significantly shorten the charging speed of the secondary battery.

Further, the negative electrode according to one aspect of the present disclosure may control the crystal structure characteristics of the carbon-based negative electrode active materials contained in the negative electrode active layer in order to implement a fast charging speed. Specifically, the first negative electrode active layer may have an orientation index ($O.I_{1st}$) of the carbon-based negative electrode active material in a range from 5 to 15 according to the following equation 1:

$$[\text{Equation 1}]$$

$$O.I = I_{004}/I_{110}$$

in Equation 1,

$I_{004}$ indicates the area of the peak representing the (004) crystal surface of a carbon-based negative electrode active material in an X-ray diffraction spectroscopy (XRD) analysis of the negative electrode active layer,

$I_{110}$ indicates the area of the peak representing the (110) crystal surface of a carbon-based negative electrode active material in an X-ray diffraction spectroscopy (XRD) analysis of the negative electrode active layer.

The orientation index (O.I) of the carbon-based negative electrode active material when measured by X-ray diffraction (XRD) may be an indicator of the extent to which the ab-axis crystal surface of the carbon-based negative electrode active material is oriented in a certain direction, specifically, with respect to the surface of the negative electrode current collector. Specifically, the negative electrode active layer shows peaks of $2\theta=26.5\pm0.2°$, $42.4\pm0.2°$, $43.4\pm0.2°$, $44.6\pm0.2°$, $54.7\pm0.2°$, and $77.5\pm0.2°$ for the carbon-based negative electrode active material, that is graphite, in the X-ray diffraction measurement. This shows the (002) face, (100) face, (101)R face, (101)H face, (004) face, and (110) face of graphite. Here, the peak showing at $2\theta=43.4\pm0.2°$ may be seen as an overlap of the peaks corresponding to the (101)R face of the carbon-based negative electrode active material and the (111) face of the current collector, such as copper (Cu).

Among these, the orientation index (O.I) of the carbon-based negative electrode active material can be measured by the ratio of the area obtained by integrating the respective intensities of the peak at $2\theta=54.7\pm0.2°$ showing the (004) face and the peak at $2\theta=77.5\pm0.2°$ showing the (110) face.

Since the peak at $2\theta=54.7\pm0.2°$ is a peak indicating a crystal surface of the carbon-based negative electrode active material having a slope with respect to the negative electrode current collector, the orientation index (O.I) of the carbon-based negative electrode active material may mean that a value closer to 0 means that the slope with respect to the surface of the negative electrode current collector is closer to 90°, and a larger value means that the slope with respect to the surface of the negative electrode current collector is closer to 0° or 180°. In other words, the negative electrode active layer according to one aspect of the present disclosure may be aligned such that the carbon-based negative electrode active material contained in the layer has an angle of 60° or more, 70° or more, 70° to 90°, 80° to 90°, 65° to 85°, or 70° to 85° with respect to the negative electrode current collector. Accordingly, the first negative electrode active layer may have a lower orientation index (O.I) of the carbon-based negative electrode active material compared to a case where the carbon-based negative electrode active material is aligned at a lower angle of less than 60°. Here, the orientation index (O.I) may be indicative of the degree to which the carbon-based negative electrode active material particles are aligned on the surface of the negative electrode current collector. In addition, in some cases, the orientation index (O.I) is indicative of the degree of alignment of the ab-axis crystal surface of the carbon-based negative electrode active material in the negative electrode active layer. In addition, the alignment of the ab-axis crystal surfaces of the carbon-based negative electrode active material may also induce rotation of the particles of the carbon-based negative electrode active material contained in the negative electrode active layer. However, since the rotation of the particles in this case is influenced by the shape of the particles and is therefore not equivalent compared to the degree to which the ab-axis crystal surface is aligned, it may be difficult for the above orientation index (O.I) to indicate that the particles of the carbon-based negative electrode active material are aligned.

Here, the first carbon-based negative electrode active material contained in the negative electrode active layer may have an orientation index ($O.I_{1st}$) in a range of 5 to 15, more specifically in a range of 5 to 13; 5 to 11; 5 to 9; 7 to 15; 10 to 15; 7 to 12; 7.5 to 10; 6 to 9.5; or 7.5 to 9.5.

When the orientation index ($O.I_{1st}$) of the carbon-based negative electrode active material contained in the first negative electrode active layer is less than the lower limit value described above, the adhesion with the negative electrode current collector may be reduced. Accordingly, the present disclosure provides that by adjusting the orientation index ($O.I_{1st}$) of the carbon-based negative electrode active material contained in the first negative electrode active layer to a value equal to or more than the lower limit value described above, the rapid charging performance of the negative electrode can be improved to the extent that the adhesion between the first negative electrode active layer and the negative electrode current collector is not reduced because the ratio of the crystal surface of the carbon-based negative electrode active material molecules constituting the negative electrode active material particles facing the negative electrode current collector is increased. In addition, by adjusting the orientation index ($O.I_{1st}$) of the carbon-based negative electrode active material contained in the negative electrode active layer to equal to or less than the upper limit value described above, the present disclosure can secure an ion migration channel in which lithium ions can migrate in a shorter distance inside the negative electrode active layer. As a result, the negative electrode of the present disclosure can prevent an increase in resistance due to a long migration distance of the lithium ions, and thus can further increase the migration speed of the lithium ions during charging and discharging, thereby simultaneously improving rapid charging performance and output performance with high safety.

In addition, the first negative electrode active layer can satisfy the Equation 2 in a range from 0.2 to 0.6:

$$[\text{Equation 2}]$$

$$O.I_{1st}/O.I_{2nd}$$

in Equation 2,

$O.I_{1st}$ indicates an orientation index of the first carbon-based negative electrode active material contained in the first negative electrode active layer,

$O.I_{2nd}$ indicates an orientation index of a second carbon-based negative electrode active material contained in the second negative electrode active layer.

Equation 2 indicates a ratio of an orientation index ($O.I_{1st}$) of the carbon-based negative electrode active material contained in the first negative electrode active layer to an orientation index ($O.I_{2nd}$) of the carbon-based negative electrode active material contained in the second negative electrode active layer.

The second negative electrode active layer may include a silicon-based negative electrode active material along with the second carbon-based negative electrode active material and may influence the alignment and/or orientation of the second carbon-based negative electrode active material when aligned and/or oriented according to the application of a magnetic field. Accordingly, the first negative electrode active layer and the second negative electrode active layer may have an orientation index ratio in a predetermined range to satisfy the above equation 2. Specifically, the first negative electrode active layer may satisfy equation 2 in a range of 0.2 to 0.6. For example, the first negative electrode active layer may satisfy in a range of 0.2 to 0.5; 0.25 to 0.5; 0.3 to 0.5; 0.2 to 0.4; 0.4 to 0.6; 0.25 to 0.45; or 0.3 to 0.45. The first negative electrode active layer of the present disclosure can be characterized in that by satisfying the above equation 2 in the range described above, a shortened lithium transport path can be established inside the first negative electrode active layer, so that the charging rate of the secondary battery can be improved even at a low C-rate of 1C, and the lifespan of the negative electrode can be improved.

Specifically, conventionally, rapid charging of lithium secondary batteries is performed by a constant current-constant voltage (CC-CV) method of charging, which increases the rate by performing charging under high C-rate conditions exceeding 1 C-rate. In general, in the constant current-constant voltage (CC-CV) method of charging, the diffusion of lithium ions in the electrode during charging proceeds during the constant current (CC) charging step, which inevitably causes concentration polarization due to prolonged diffusion. Such concentration polarization of lithium ions easily causes lithium precipitation at the negative electrode, especially under high-rate conditions where the amount of current (A) charged compared to the rated capacity value (Ah) of the secondary battery exceeds the standard value (in other words, the amount of current at 1C-rate: 1A), which has the limitation of significantly lowering the safety of the secondary battery. In addition, the high-rate constant current-constant voltage (CC-CV) method of charging reaches the upper limit value at a very fast rate during the constant current (CC) charging stage, so that the current may drop to the preset limit value before the active material is fully consumed. In other words, the charging time is significantly increased during the constant voltage (CV) charging stage, so that the reduction effect of the total time to charge the secondary battery is insignificant.

However, the present disclosure can secure a shorter ion migration channel for lithium ions in the negative electrode active layer, and thus can significantly reduce the resistance induced in the negative electrode active layer during charging. Such a decrease in resistance may lead to a time of performing the constant current (CC) charging step being longer than the time of performing the constant voltage (CV) charging step in the overall charging time when charging by the constant current-constant voltage (CC-CV) method of charging. Here, the constant current (CC) charging step has the same charge capacity per unit time because the same amount of current flows, but the constant voltage (CV) charging step shows a tendency that the current is reduced to maintain the same voltage; in other words, the charge capacity per unit time is sharply reduced in the constant voltage (CV) charging step, so that the overall charging time can be significantly reduced as the performance time of the constant current (CC) charging step increases. Therefore, the present disclosure can increase the performance time of the constant current (CC) charging step by controlling the orientation index ($O.I_{2nd}$) of the carbon-based negative electrode active material, thereby enabling the charging of the secondary battery to be completed in a significantly shorter time.

Further, since the rapid charging of such a secondary battery can be implemented under standard value (e.g., 1C-rate) conditions rather than high-rate C-rate conditions, it is advantageous to overcome a safety problem of a lithium secondary battery due to a concentration polarization phenomenon of lithium ions induced in the negative electrode active layer during charging.

Meanwhile, the first negative electrode active layer and the second negative electrode active layer may each have a porosity in the range of 20% to 30%, and more specifically, may have a porosity in the range of 23% to 30%; 25% to 30%; 26% to 29%; or 24% to 28%.

Moreover, the first negative electrode active layer and the second negative electrode active layer may have a BET specific surface area in the range of 0.62 $m^2$/g or less, more specifically may show a BET specific surface area in the range of 0.615 $m^2$/g or less, 0.6 $m^2$/g or less, 0.5 $m^2$/g or less, 0.20 to 0.62 $m^2$/g, 0.30 to 0.62 $m^2$/g, 0.40 to 0.62 $m^2$/g, 0.40 to 0.60 $m^2$/g, 0.40 to 0.55 $m^2$/g, 0.40 to 0.50 $m^2$/g, or 0.58 to 0.62 $m^2$/g.

Here, the porosity and specific surface area may be measured by the Brunauer-Emmett-Teller (BET) method. For example, it can be measured by the BET six-point method by the nitrogen gas adsorption distribution method using a Porosimetry analyzer (Bell Japan Inc, Belsorp-II mini).

The present disclosure can further increase the energy density of the negative electrode without deteriorating the electrolyte wettability of each negative electrode active layer by adjusting the porosity and the BET specific surface area of each negative electrode active layer to the range as described above, respectively.

Moreover, the total thickness of the first negative electrode active layer and the second negative electrode active layer may be in the range of 50 $\mu$m to 500 $\mu$m, more specifically in the range of 100 $\mu$m to 400 $\mu$m; 200 $\mu$m to 350 $\mu$m; 50 $\mu$m to 180 $\mu$m; 80 $\mu$m to 150 $\mu$m; 100 $\mu$m to 250 $\mu$m; 200 $\mu$m to 290 $\mu$m; or 130 $\mu$m to 190 $\mu$m.

The present disclosure can implement a high charge and discharge capacity of the negative electrode by adjusting the total thickness of the active layer of the negative electrode to the above range. In addition, it is advantageous that the volume change of the negative electrode during charging and discharging of the secondary battery can be minimized, thereby increasing the lifespan characteristics of the negative electrode.

In addition, the negative electrode active layer according to one aspect of the present disclosure may selectively further comprise conductive materials, binders, other additives, and the like as needed, along with the negative electrode active material as the main component.

The conductive material may include one or more of carbon black, acetylene black, ketjen black, carbon nanotubes, carbon fibers, and the like, but is not limited thereto.

As one example, the negative electrode active layer may contain carbon black, carbon nanotubes, carbon fibers, and the like as conductive materials, either alone or in combination.

In this case, the content of the conductive material may be 0.1 to 10 parts by weight based on 100 parts by weight of the overall negative electrode active layer, and more specifically, it may be 0.1 to 8 parts by weight, 0.1 to 5 parts by weight, 0.1 to 3 parts by weight, 2 to 6 parts by weight, or 0.5 to 2 parts by weight. The present disclosure can control the content of the conductive material to a range as described above, thereby preventing a problem in which the resistance of the negative electrode increases due to a low content of the conductive material, resulting in a decrease in the charge capacity, and a problem in which the content of the negative electrode active material decreases due to an excessive amount of the conductive material, resulting in a decrease in the charge capacity, or a problem in which the rapid charge characteristic decreases due to an increase in the loading amount of the negative electrode active layer.

Moreover, the binder may be appropriately applied as a component that assists in coupling the negative electrode active material and the conductive material or the like to the current collector to the extent that it does not degrade the electrical properties of the electrode, specifically, may include any one or more selected from the group consisting of vinylidene fluoride-hexafluoropropylene copolymer (PVDF-co-HFP), polyvinylidenefluoride (PVdF), polyacrylonitrile, and polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be 0.1 to 10 parts by weight based on the overall 100 parts by weight of the negative electrode active layer, and more specifically, it may be 0.1 to 8 parts by weight, 0.1 to 5 parts by weight, 0.1 to 3 parts by weight, or 2 to 6 parts by weight. The present disclosure can control the content of the binder contained in the negative electrode active layer to the above range, thereby preventing the adhesion of the active layer from deteriorating due to a low content of the binder or the electrical properties of the electrode from deteriorating due to an excess of the binder.

In addition, the negative electrode current collector is not particularly limited as long as it has a high conductivity without causing chemical changes to the battery, and for example, copper, stainless steel, nickel, titanium, calcined carbon, and the like can be used, and in the case of copper or stainless steel, the ones surface treated with carbon, nickel, titanium, silver, and the like can also be used. Furthermore, the average thickness of the negative electrode current collector may be appropriately applied from $1\mu m$ to $500\mu m$, considering the conductivity and overall thickness of the negative electrode to be manufactured.

## Lithium Secondary Battery

Further, the present disclosure provides, in one aspect, a lithium secondary battery including an electrode assembly including a positive electrode, a negative electrode of the present disclosure described above, and a separator disposed between the positive electrode and the negative electrode; and
an electrolyte composition with which the electrode assembly is impregnated.

The lithium secondary battery according to one aspect of the present disclosure includes an electrode assembly of a structure in which a plurality of positive electrodes and a plurality of negative electrodes are alternately disposed, and a separator is located therebetween. The lithium secondary battery comprises the negative electrodes of the present disclosure as described above, and has a large charge and discharge capacity, excellent lifespan characteristics, and can be charged in a short time even at a 1C-rate, and thus can be usefully used as a power source for medium and large devices such as electric vehicles, etc.

In this case, the negative electrode has the same configuration as the configuration described above, and thus a specific description is omitted.

In addition, the positive electrode includes a positive electrode active layer comprising a positive electrode active material on the positive electrode current collector, and the positive electrode active layer may selectively further include conductive materials, binders, other additives, and the like as needed.

The positive electrode active material may comprise one or more of the lithium metal oxides represented by the following chemical formula 1 and chemical formula 2, which are capable of reversibly intercalating and deintercalating lithium ions, as a material capable of electrochemically reacting on the positive electrode collector:

[Chemical formula 1] $\quad\quad Li_x[Ni_yCo_zMn_wM^1_v]O_2$

[Chemical formula 2] $\quad\quad LiM^2_pMn_qP_rO_4$

in the above Chemical Formula 1 and Chemical formula 2,

$M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, or Mo.
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,
$M^2$ is Ni, Co or Fe.
p is $0.05 \leq p \leq 1.0$.
q is 2-p.
r is 0 or 1.

The lithium metal oxide represented by chemical formula 1 and chemical formula 2 is a material containing a high content of nickel (Ni) and manganese (Mn), respectively, and when used as a positive electrode active material, it has the advantage of being able to stably supply electricity of high capacity and/or high voltage compared to conventionally used positive electrode active materials such as lithium iron phosphate ($LiFeO_4$).

In this case, the lithium metal oxide represented by the above chemical formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like, and the lithium metal oxide represented by the above chemical formula 2 may include $LiNi_{0.7}Mn_{1.3}O_4$; $LiNi_{0.5}Mn_{1.5}O_4$; $LiNi_{0.3}Mn_{1.7}O_4$, and the like, which may be used alone or in combination.

In addition, the positive electrode active material may be included in an amount of 85 parts by weight or more based on 100 parts by weight of the positive electrode active layer 100 parts by weight, and more specifically may be included in an amount of 90 parts by weight or more, 93 parts by weight or more, or 95 parts by weight or more.

Moreover, the positive electrode active layer may further include conductive materials, binders, other additives, and the like together with the positive electrode active material.

In this case, the conductive material used to improve the electrical performance of the positive electrode may be any conductive material conventionally used in the art, but may specifically include at least one or more selected from the group consisting of natural graphite, artificial graphite, carbon black, acetylene black, denka black, ketjen black, super-P, channel black, furnace black, lamp black, thermal black, graphene, and carbon nanotubes.

Moreover, the conductive material may be included in an amount of 0.1 to 5 parts by weight based on 100 parts by weight of each positive electrode active layer, and more particularly may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder plays a role in binding the positive electrode active material, the positive electrode additive, and the conductive material to each other, and can be used without being particularly limited as long as it has such function. Specifically, the binder may include one or more types of resins selected from the group consisting of polyvinylidenefluoride-hexafluoropropylene copolymer (PVdF-co-HFP), polyvinylidenefluoride (PVdF), polyacrylonitrile, polymethylmethacrylate, and copolymers thereof. As one example, the binder may include polyvinylidenefluoride.

Additionally, the binder may be included in an amount of 1 to 10 parts by weight based on each positive electrode active layer 100 parts by weight, more specifically, 2 to 8 parts by weight; or 1 to 5 parts by weight.

The total thickness of the positive electrode active layer is not particularly limited, but may be in the range of 50$\mu$m to 300$\mu$m, and more particularly may be in the range of 100$\mu$m to 200$\mu$m; 80$\mu$m to 150$\mu$m; 120$\mu$m to 170$\mu$m; 150$\mu$m to 300$\mu$m; 200$\mu$m to 300$\mu$m; or 150$\mu$m to 190$\mu$m.

In addition, the positive electrode can use a positive electrode current collector having a high conductivity without causing chemical changes in the battery. For example, stainless steel, aluminum, nickel, titanium, calcined carbon, or the like may be used, and in the case of aluminum or stainless steel, the ones surface treated with carbon, nickel, titanium, silver, or the like may be used. Moreover, the average thickness of the current collector may be appropriately applied from 3$\mu$m to 500$\mu$m, considering the conductivity and the overall thickness of the positive electrode to be manufactured.

Moreover, the separator interposed between the positive electrode and the negative electrode of each unit cell is an insulating thin film having high ion permeability and mechanical strength and may be any polymer conventionally used in the art, but is not particularly limited thereto, and may include one or more types of polymers such as polypropylene; polyethylene; or polyethylene-propylene copolymers, which are chemically resistant and hydrophobic. The separator may have the form of a porous polymeric base substrate such as a sheet or a nonwoven fabric, etc. including the polymer described above, and in some cases, it may also have the form of a composite separator in which organic or inorganic particles are coated by an organic binder on the porous polymeric base substrate. Moreover, the separator may have an average diameter of the pores of 0.01$\mu$m to 10$\mu$m, and an average thickness of 5$\mu$m to 300$\mu$m.

Meanwhile, the lithium secondary battery according to one aspect of the present disclosure may be in the form of a secondary battery that may include a stack-type; a zigzag-type; or a zigzag-stack-type electrode assembly but is not particularly limited thereto. As one example, a lithium secondary battery according to one aspect of the present disclosure may be a pouch-type secondary battery or a prismatic secondary battery.

Pouch-type secondary batteries and/or prismatic secondary batteries have the advantage of being highly utilizable in terms of energy density, as the unit cells of the secondary battery can be packed with a high density within a limited space.

Further, in the lithium secondary battery, the electrolyte composition may be used without being particularly limited as long as it is conventionally applied to lithium secondary batteries.

Specifically, the electrolyte composition may include a non-aqueous organic solvent, a lithium salt and an electrolyte additive, and the like.

Here, the non-aqueous organic solvent may be any organic solvent known in the art for use in non-aqueous electrolytes, without particular limitation. For example, the non-aqueous organic solvents include N-methyl-2-pyrrolidinone, ethylene carbonate (EC), propylene carbonate (PC), butylene carbonate, dimethyl carbonate (DMC), diethyl carbonate (DEC), gamma-butyrolactone, 1,2-dimethoxyethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivatives, tetrahydrofuran derivatives, ether, methyl pyrophosphate (MP), ethyl propionate (EP), propyl propionate (PP), and other non-amphoteric organic solvents may be used.

In addition, one type of non-aqueous organic solvent used in the present disclosure can be used alone, and two or more types can be mixed in any combination or ratio to be appropriate for the usage. Among them, from the point of view of electrochemical stability to oxidation-reduction and chemical stability with respect to heat or reaction with solutes, it is particularly preferable to mix propylene carbonate, ethylene carbonate, fluoroethylene carbonate, diethyl carbonate, dimethyl carbonate, ethylmethyl carbonate, and the like.

Moreover, the lithium salts may be applied without particular limitation to any non-aqueous electrolyte known in the art. Specifically, the lithium salt may include one or more types of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, or $(FSO_2)_2NLi$.

The lower limit of the range of appropriate concentration for appropriately using the lithium salt is 0.5mol/L or more, more specifically 0.7mol/L or more, more specifically 0.9mol/L or more, and the upper limit is 2.5mol/L or less, specifically 2.0mol/L or less, more specifically 1.5mol/L or less. When the concentration of the lithium salt is lower than 0.5mol/L, there is a possibility that the cycle characteristics, output characteristics of the non-aqueous electrolyte battery may be degraded by decreasing the ionic conductivity. In addition, if the concentration of the lithium salt exceeds 2.5mol/L, the viscosity of the electrolyte for the non-aqueous electrolyte battery increases, which again may decrease the ionic conductivity, which may decrease the cycle characteristics and output characteristics of the non-aqueous electrolyte battery.

In addition, if a large amount of lithium salt is dissolved in a non-aqueous organic solvent at one time, the temperature of the electrolyte may increase due to the heat of dissolution of the lithium salt. In the case of lithium salts containing fluorine, if the temperature of the non-aqueous organic solvent is significantly increased due to the heat of dissolution of the lithium salt, decomposition may be facilitated, and hydrogen fluoride (HF) may be generated. The hydrogen fluoride (HF) is undesirable, because it can cause the degradation of the battery performances. Therefore, the temperature of dissolving the lithium salt in the non-aqueous organic solvent is not particularly limited, but may be controlled from -20°C to 80°C, and more particularly may be controlled from 0°C to 60°C.

Furthermore, the electrolyte additive may be included as an additional auxiliary component to improve the properties of the electrolyte composition. Any commonly used electrolyte additive may be added to the non-aqueous electrolyte of the present disclosure in any proportion. Specifically, compounds having an overcharge prevention effect, a negative electrode film forming effect, a positive electrode protection effect can be mentioned, such as cyclohexylbenzene, biphenyl, t-butylbenzene, carbonate, vinyl ethylene carbonate, difluoroanisole, fluoroethylene carbonate, propanesulfone, succinonitrile, dimethylvinylene carbonate, etc. In addition, it is also possible to use electrolytes for non-aqueous electrolyte batteries by solidifying them with gelling agents or cross-linking polymers, such as when used in non-aqueous electrolyte batteries called lithium polymer batteries.

The lithium secondary battery according to one aspect of the present disclosure has the advantage that by having the above-described configuration, the battery has a large charge capacity, excellent lifespan characteristics, and can be charged in a short time even at a 1C-rate.

## Method of manufacturing negative electrode

In addition, the present disclosure, in an aspect, provides a method of manufacturing a negative electrode according to the present disclosure, comprising:

applying a negative electrode slurry to at least one side of a negative electrode current collector;
applying magnetic field to the applied negative electrode slurry; and
drying the negative electrode slurry to which the magnetic field is applied to form a negative electrode active layer.

A method of manufacturing a negative electrode according to the present disclosure refers to a method of manufacturing a negative electrode of the present disclosure as described above. The method of manufacturing the negative electrode can manufacture a negative electrode having a negative electrode active layer having a controlled crystalline characteristics of the negative electrode active material by applying a negative electrode slurry on a negative electrode current collector, applying a magnetic field to the surface of the applied negative electrode slurry, and drying each negative electrode slurry.

Here, the step of applying the negative electrode slurry is coating the surface of the moving negative electrode current collector by discharging the negative electrode slurry containing the carbon-based negative electrode active material. This step may be applied in any method conventionally applied in the art without particular limitation, but preferably uses a die coating method. The die coating method may be performed by means of a slot die having a shim for controlling the discharge condition of the negative electrode slurry. In this case, by controlling the shape, position, etc. of the shim, the loading amount, application thickness, etc. of the negative electrode slurry applied on the negative electrode current collector can be easily controlled.

Meanwhile, the step of applying a magnetic field to the negative electrode slurry may be controlling the crystalline characteristics of the negative electrode active material contained in the negative electrode slurry. Specifically, the step may be applying magnetic field to a surface of the negative electrode slurry applied on the negative electrode current collector to align the ab-axis crystal surface of each carbon-based negative electrode active material included in the negative electrode slurry to have a high angle with respect to the negative electrode current collector.

In this case, the magnetic field application may be applied by magnetic portions disposed in the upper portion and the lower portion of the negative electrode current collector, which is moved with the negative electrode slurry applied to the surface. The polarities of the magnetic portions disposed in the upper portion and the lower portion may be different from each other.

Moreover, the orientation index (O.I) of the carbon-based negative electrode active material contained in each negative electrode slurry may be adjusted by a strength of the applying magnetic field, an application time, or the like, and accordingly, the step of applying the magnetic field may be performed under a predetermined magnetic field strength condition.

Specifically, the step of applying the magnetic field may be applied with a magnetic field in a range of 10,000 G (Gauss) or less, specifically, the magnetic field may be applied with a strength in the range of 1,000 G to 7,000 G; 2,000 G to 6,000 G; 1,500 G to 5,000 G; 1,500 G to 4,500 G; 4,000 G to 7,000 G; 2,000 G to 4,000 G; 2,500 G to 3,500 G; 3,000 G to 6,500 G; or 2,700 G to 3,300 G.

In addition, the step of applying the magnetic field may be performed for 1 second to 20 seconds, and more specifically, may be performed for 1 second to 15 seconds; 1 second to 10 seconds; 5 seconds to 20 seconds; 10 seconds to 20 seconds; 11 seconds to 18 seconds; 1 second to 5 seconds; 7 seconds to 13 seconds; or 6 seconds to 11 seconds.

As one example, in the step of applying the magnetic field, a magnetic field of $3,000 \pm 50$ G may be applied to the negative electrode slurry for 9 seconds to 11 seconds.

Further, the step of applying the magnetic field, as described above, may be performed by magnetic portions introduced into the upper portion and the lower portion of the applied negative electrode slurry, but the size of the magnetic portions may be adjusted to be larger than the size of the negative electrode slurry so that the magnetic field applied to the negative electrode slurry may be uniformly applied to the overall surface of the negative electrode slurry. For example, the magnetic portion may have a length ratio based on the length in the width direction of the negative electrode slurry, in the range of 105% to 200% and specifically, may have a length ratio in the range of 110% to 180%; 110% to 160%; 110% to 140%; 110% to 130%; 130% to 150%; or 105% to 120% based on the length in the width direction of the negative electrode slurry.

The present disclosure can be uniformly implemented to make the orientation index (O.I) of the carbon-based negative electrode active material contained in the negative electrode slurry satisfy a predetermined range by controlling the magnetic field strength, the application time, and/or the magnetic portion size as described above in the step of applying magnetic field.

In addition, the step of forming the negative electrode active layer may include the steps of drying the negative electrode slurry; and rolling the dried negative electrode slurry.

In this case, the step of drying the negative electrode slurry may be applied in a method that can maintain the orientation of the carbon-based negative electrode active material contained in the negative electrode active layer, without particular limitation.

For example, the step of drying may be drying the negative electrode slurry by applying heat energy to the negative electrode slurry using a hot air dryer, a vacuum oven or the like.

Moreover, the step of rolling the dried negative electrode slurry is increasing the density of the negative electrode active layer by applying pressure to the dried negative electrode slurry using a roll press or the like. At this time, the rolling may be performed at a temperature condition higher than room temperature.

Specifically, the rolling may be performed at a temperature in the range of 50°C to 100°C, more specifically, at a temperature in the range of 60°C to 100°C; 75°C to 100°C; 85°C to 100°C; 50°C to 90°C; 60°C to 80°C; or 65°C to 90°C.

In addition, the rolling may be performed at a rolling speed ranging from 2m/s to 7m/s, and more specifically, the rolling may be performed at a rolling speed ranging from 2m/s to 6.5m/s; 2m/s to 6m/s; 2m/s to 5.5m/s; 2m/s to 5m/s; 2m/s to 4.5m/s; 2m/s to 4m/s; 2.5m/s to 4m/s; 2.5m/s to 3.5m/s; 3.5m/s to 5m/s; 5m/s to 7m/s; 5.5m/s to 6.5m/s; or 6m/s to 7m/s.

Moreover, the rolling may be performed under a pressure condition in the range of 50MPa to 200MPa, specifically, under a pressure condition in the range of 50MPa to 150MPa; 50MPa to 100MPa; 100MPa to 200MPa; 150MPa to 200MPa; or 80MPa to 140MPa.

The present disclosure can increase the energy density of the negative electrode while minimizing the change in the orientation index of the carbon-based negative electrode active material contained in the formed negative electrode active layer by performing the rolling of the dried negative electrode slurry under the above temperature, speed and/or pressure conditions.

EXAMPLES

Hereinafter, the present disclosure will be described in more detail by examples and experimental examples.

However, the following examples and experimental examples are only illustrative of the present disclosure, and the present disclosure is not limited to the following examples and experimental examples.

**Examples 1 to 4 and Comparative Examples 1 to 3. Manufacturing negative electrode for lithium secondary battery**

As the carbon-based negative electrode active material, primary particles in flake form were assembled to form secondary particles of artificial graphite (average particle diameter ($D_{50}$): $16\pm0.1\mu m$) and silicon dioxide ($SiO_2$, average particle diameter ($D_{50}$): $8.0\pm0.1\mu m$) were prepared. In addition, styrene butadiene rubber (SBR) as a binder and carboxymethylcellulose (CMC) as a thickening agent were prepared.

Then, 96 parts by weight of the first artificial graphite, 1.5 parts by weight of the carboxymethylcellulose (CMC), and 2.5 parts by weight of the styrene butadiene rubber (SBR) were mixed with water to a solid content of 50% to prepare the first negative electrode slurry.

In addition, a second negative electrode slurry was prepared by mixing 96 parts by weight of a second artificial graphite and silicon dioxide ($SiO_2$), 1.5 parts by weight of carboxymethylcellulose (CMC), and 2.5 parts by weight of styrene butadiene rubber (SBR) with water so that the solid content became 50%. At this time, the content ratio of the second artificial graphite and silicon dioxide($SiO_2$ ) in the second negative electrode slurry to constitute the second negative electrode active layer based on the overall negative electrode active material contained in the second negative electrode slurry was adjusted as shown in Table 1 below.

After each negative electrode slurry was prepared, the first negative electrode slurry and the second negative electrode slurry were simultaneously cast on a copper thin plate (thickness: $10\mu m$) that was being transferred roll-to-roll (transfer speed: 5 m/min) using a dual die coater. At this time, the loading amount of the cast first negative electrode slurry and the second negative electrode slurry was adjusted to be the same.

Permanent magnets having a length ratio of 110% to 120% of the length in the width direction of the applied negative electrode slurry were disposed in the upper portion of the negative electrode slurry and in the lower portion of the negative electrode current collector, and magnetic field was applied with a magnetic field strength of $3,000\pm20$ G. At this time, the time at which the magnetic field was applied is shown in Table 1. The negative electrode slurry with the magnetic field applied was hot air dried to form a negative electrode in the form of a first negative electrode active layer and second negative electrode active layer sequentially stacked on the negative electrode current collector. The formed negative electrode active layer was rolling at $50\pm1$ °C at a pressure of 100 MPa to 150 MPa and a transfer speed of 3 m/s to prepare negative electrodes for lithium secondary batteries (each average thickness of the negative electrode active layer: $120\pm5\mu m$, loading amount: 21-30 mg/cm$^2$).

For each of the manufactured negative electrodes, X-ray diffraction spectroscopy (XRD) of the first negative electrode active layer and the second negative electrode active layer was performed and the spectrum was measured. At this time, for the first negative electrode active layer, after measuring the X-ray diffraction spectroscopy (XRD) of the second negative electrode active layer, the second negative electrode active layer was peeled off and removed, and then the exposed surface of the first negative electrode active layer was subjected to X-ray diffraction measurement. Moreover, the measurement conditions for X-ray diffraction (XRD) were as the following:

- Target: Cu (K$\alpha$ ray) graphite monochromator.
- Slit: Divergence slit = 1 degree, Reception slit = 0.1 mm, Scattering slit = 1 degree
- Measurement area: (110) face: 76.5° < 2$\theta$ < 78.5° / (004) face: 53.5° < 2$\theta$ < 56.0°.

From the spectrum measured under the above conditions, the average orientation index (O.I) of the carbon-based negative electrode active material contained in each negative electrode active layer was calculated using equation 1. The results are shown in Table 1:

$$[\text{Equation 1}]$$

$$O.I = I_{004}/I_{110}$$

in Equation 1,
wherein $I_{004}$ indicates the area of the peak representing the (004) crystal surface of a carbon-based negative electrode active material in an X-ray diffraction spectroscopy (XRD) analysis of the negative electrode active layer,
wherein $I_{110}$ indicates the area of the peak representing the (110) crystal surface of a carbon-based negative electrode active material in an X-ray diffraction spectroscopy (XRD) analysis of the negative electrode active layer.

[Table 1]

| | Content ratio [wt.%] | | Orientation index (O.I) | | $O.I_{1st}/O.I_{2nd}$ | Magnetic field application | |
|---|---|---|---|---|---|---|---|
| | 2nd artificial graphite | SiO | $O.I_{1st}$ | $O.I_{2nd}$ | | Yes or No | Time |
| Example 1 | 99 | 1 | 8 | 15 | 0.53 | O | 9~11 seconds |
| Example 2 | 90 | 10 | 8 | 22 | 0.36 | O | 9~11 seconds |
| Example 3 | 80 | 20 | 8 | 20 | 0.40 | O | 9~11 seconds |
| Example 4 | 70 | 30 | 8 | 25 | 0.32 | O | 9~11 seconds |
| Comparative example 1 | 90 | 10 | 20 | 25 | 0.80 | X | 0 second |
| Comparative example 2 | 90 | 10 | 18 | 24 | 0.75 | O | 1~2 seconds |
| Comparative example 3 | 100 | 0 | 8 | 8 | 1.00 | O | 9~11 seconds |

**Comparative Example 4. Manufacturing negative electrode for lithium secondary battery**

The first negative electrode slurry and the second negative electrode slurry were prepared using the same method as in example 1, and the first negative electrode slurry and the second negative electrode slurry prepared were simultaneously cast on a copper thin plate (thickness: $10\mu m$) using a dual die coater. At this time, the cast first negative electrode slurry and the second negative electrode slurry had the same loading amount, and the total loading amount of the first negative electrode slurry and the second negative electrode slurry was 21 mg/cm$^2$ to 30 mg/cm$^2$.

Permanent magnets having a length ratio of 110% to 120% of the length in the width direction of the applied negative electrode slurry were disposed in the upper portion of the negative electrode slurry and the lower portion of the negative electrode current collector, and a magnetic field of $10,000\pm100$ G was applied to the surface of the negative electrode slurry for 15 seconds. The negative electrode slurry with the magnetic field applied was hot air dried to form a negative electrode in the form of a first negative electrode active layer and a second negative electrode active layer stacked sequentially on the negative electrode current collector. The formed negative electrode active layer was rolling at $50\pm1°C$. at a pressure of 100 MPa to 150 MPa and a transfer speed of 3 m/s to manufacture a negative electrode for lithium secondary battery.

For the negative electrodes manufactured by the same method as in example 1, X-ray diffraction spectroscopy (XRD) was performed on the first negative electrode active layer and the second negative electrode active layer to measure the spectrum. From the measured spectrum, the average orientation index (O.I) of each negative electrode active layer was calculated using equation 1. The first negative electrode active layer and the second negative electrode active layer had orientation index (O.I) of 4 and 24, respectively, and their ratio ($O.I_{1st}/O.I_{2nd}$) was 0.17.

**Examples 5 to 8 and Comparative Examples 5 to 8. Manufacturing lithium secondary battery**

$LiNi_{0.7}Co_{0.1}Mn_{0.1}Al_{0.1}O_2$ with a particle size of $5\mu m$ prepared as the positive electrode active material, and polyvinylidene fluoride as the carbon-based conductor and binder were mixed in a weight ratio of 94:3:3, and mixed in N-methyl pyrrolidone (NMP) to become a solid content of 50% to prepare the positive electrode slurry.

The positive electrode was manufactured by casting the prepared positive electrode slurry on an aluminum thin plate, drying it in a 120°C vacuum oven, and then rolling it.

A separator comprising $18\mu m$ of polypropylene was interposed between the above-obtained positive electrode and the negative electrode manufactured in Examples 1-4 and Comparative Examples 1-4, respectively, and inserted into a case, and then an electrolyte composition was injected to assemble a 1Ah grade lithium secondary battery.

At this time, the types of negative electrodes applied to each lithium secondary battery are shown in Table 2 below.

[Table 2]

| | Type of negative electrode applied |
|---|---|
| Example 5 | Negative electrode manufactured in Example 1 |
| Example 6 | Negative electrode manufactured in Example 2 |

(continued)

|  | Type of negative electrode applied |
|---|---|
| Example 7 | Negative electrode manufactured in Example 3 |
| Example 8 | Negative electrode manufactured in Example 4 |
| Comparative example 5 | Negative electrode manufactured in Comparative example 1 |
| Comparative example 6 | Negative electrode manufactured in Comparative example 2 |
| Comparative example 7 | Negative electrode manufactured in Comparative example 3 |
| Comparative example 8 | Negative electrode manufactured in Comparative example 4 |

**Experimental Example.**

To evaluate the performance of the negative electrodes according to aspects of the present disclosure, the following experiments were performed on each of the negative electrodes and lithium secondary batteries manufactured in the Examples and Comparative Examples.

1) Lifespan characteristics evaluation

Each of the lithium secondary batteries manufactured in Examples 5 to 8 and Comparative Examples 5 to 8 was activated by charging under CC-CV condition at a speed of 0.3C to 4.35V at a temperature of 25°C and discharging under CC condition at a speed of 0.3C to 3.0V.

Charging each of the activated lithium secondary batteries under CC-CV condition up to 4.35V at a speed of 1.0C at a temperature of 25°C and discharging them under CC condition up to 3.0V at a speed of 1.0C was set as 1 cycle, and 1 cycle charge and discharge of each of the lithium secondary batteries manufactured in the examples and comparative examples was performed. At this time, the capacity during charging and discharging was measured to confirm the charge and discharge capacity of the first cycle. Then, 499 cycles of charging and discharging of each lithium secondary battery were performed, for a total of 500 cycles of charging and discharging. In this case, the charge and discharge capacity of the 500th cycle was confirmed at the end of the last cycle. Based on the measured charge and discharge capacity of the first cycle, the charge and discharge capacity retention rate of the 500th cycle was calculated. The results are shown in Table 3 below.

2) 1C-rate rapid charging evaluation

Each of the lithium secondary batteries manufactured in Examples 5 to 8 and Comparative Examples 5 to 8 was activated by charging at 25°C at a speed of 0.3C up to 4.35V under CC-CV condition and discharging at a speed of 0.3C up to 3.0V under CC condition.

Each activated lithium secondary battery was performed with a constant current-constant voltage (CC-CV) method of charging at a temperature of 25°C, and the time required for the state of charge (SOC) to reach 80% was measured. The charging was performed as a constant current (CC) charging with a current of 1.0 C-rate until the voltage reaches 4.35V, followed by a constant voltage (CV) charging that maintains 4.35V and cuts off when the current reaches 0.005 C-rate. The measured charging times are shown in Table 3 below.

[Table 3]

|  | Type of negative electrode | Capacity retention rate [%] | Charging time (SOC 80%) |
|---|---|---|---|
| Example 5 | Negative electrode manufactured in Example 1 | 92 | 23 seconds |
| Example 6 | Negative electrode manufactured in Example 2 | 90 | 18 seconds |
| Example 7 | Negative electrode manufactured in Example 3 | 80 | 14 seconds |
| Example 8 | Negative electrode manufactured in Example 4 | 30 | 12 seconds |
| Comparative example 5 | Negative electrode manufactured in Comparative Example 1 | 90 | 50 seconds |
| Comparative example 6 | Negative electrode manufactured in Comparative Example 2 | 90 | 39 seconds |

(continued)

|  | Type of negative electrode | Capacity retention rate [%] | Charging time (SOC 80%) |
|---|---|---|---|
| Comparative example 7 | Negative electrode manufactured in Comparative Example 3 | 95 | 30 seconds |
| Comparative example 8 | Negative electrode manufactured in Comparative Example 4 | 86 | 27 seconds |

As shown in Table 3 above, it can be seen that the negative electrodes for lithium secondary batteries according to one aspect of the present disclosure not only have excellent lifespan characteristics, but also complete charging at a fast speed under 1C-rate condition.

Specifically, the negative electrodes of the examples showed a high charge and discharge capacity retention rate of 80% or more after 500 cycles of charging and discharging. In addition, the secondary batteries of the examples comprising such negative electrodes reached a state of charge (SOC) of 80% in a short time of less than 25 seconds under the standard constant current-constant voltage (CC-CV) charging condition of 1C-rate.

On the other hand, the negative electrode of comparative example 3, which does not include silicon-based negative electrode active material, silicon dioxide ($SiO_2$), as the negative electrode active material, showed a relatively high charge and discharge capacity retention rate of approximately 95% after 500 cycles of charging and discharging, but the charge and discharge capacity of 1 cycle was found to be significantly lower compared to the negative electrodes of the examples including silicon dioxide ($SiO_2$).

In addition, the negative electrodes of the other comparative examples including silicon dioxide ($SiO_2$) were found to have a large capacity during charge and discharge. However, the negative electrodes were found to have a time to reach 80% state of charge (SOC) of 39 seconds or more under standard constant current-constant voltage (CC-CV) charging conditions at 1C-rate.

This indicates that by controlling the orientation index (O.I) of the carbon-based negative electrode active material and the position and content of the silicon-based negative electrode active material included in each of the active layers, i) the lifespan characteristics of the negative electrode and ii) the charging speed under standard C-rate condition can be simultaneously improved.

From these results, it can be seen that the negative electrode for lithium secondary battery according to one aspect of the present disclosure has a large charge and discharge capacity and excellent lifespan characteristics, and the lithium secondary battery including it can be charged in a short time even at 1 C-rate.

As above, the present disclosure has been described in more detail through the aspects. However, since the configuration described in the drawings or aspects described herein is merely one aspect of the present disclosure and do not represent the overall technical spirit of the disclosure, it should be understood that the disclosure covers various equivalents, modifications, and substitutions at the time of filing of this application.

Thus, the technical scope of the present disclosure is not limited to what is described in the detailed description of the specification but should be determined by the claims of the patent.

**Claims**

1. A negative electrode comprising:

a negative electrode current collector,
a first negative electrode active layer provided on at least one side of the negative electrode current collector and including a first carbon-based negative electrode active material, and
a second negative electrode active layer provided on the first negative electrode active layer and including a second carbon-based negative electrode active material and a silicon-based negative electrode active material;
wherein the first negative electrode active layer has an orientation index in a range from 5 to 15 according to the following Equation 1, and
satisfies the following eEquation 2 in a range from 0.2 to 0.6:

$$[\text{Equation 1}]$$

$$O.I = I_{004}/I_{110}$$

[Equation 2]

$$O.I_{1st}/O.I_{2nd}$$

wherein, in Equation 1 and Equation 2,

$I_{004}$ indicates an area of a peak representing a (004) crystal surface of a carbon-based negative electrode active material in an X-ray diffraction spectroscopy XRD analysis of the first negative electrode active layer,
$I_{110}$ indicates the area of the peak representing a (110) crystal surface of a carbon-based negative electrode active material in an X-ray diffraction spectroscopy XRD analysis of the first negative electrode active layer,
$O.I_{1st}$ indicates an orientation index of the first carbon-based negative electrode active material contained in the first negative electrode active layer,
$O.I_{2nd}$ indicates an orientation index of the second carbon-based negative electrode active material contained in the second negative electrode active layer.

2. The negative electrode of claim 1, wherein the silicon-based negative electrode active material ranges from 1 wt.% to 25 wt.% based on the weight of the second negative electrode active layer.

3. The negative electrode of claim 1, wherein the orientation index of the first negative electrode active layer is in a range of 7 to 12.

4. The negative electrode of claim 1, wherein the first carbon-based negative electrode active material and the second carbon-based negative electrode active material each comprise one or more types of natural graphite or artificial graphite.

5. The negative electrode of claim 1, wherein the silicon-based negative electrode active material comprises one or more types of silicon Si, silicon carbide SiC, or silicon oxide $SiO_q$, and wherein $0.8 \leq q \leq 2.5$.

6. The negative electrode of claim 1, wherein a total thickness of the first negative electrode active layer and the second negative electrode active layer is in a range of $50\mu m$ to $500\mu m$.

7. A method of manufacturing a negative electrode according to claim 1, comprising:

applying a negative electrode slurry to at least one side of a negative electrode current collector;
applying a magnetic field to the applied negative electrode slurry; and
drying the applied negative electrode slurry to which the magnetic field is applied to form a negative electrode active layer.

8. The method of manufacturing a negative electrode of claim 7, wherein the step of applying the magnetic field is performed for a duration in a range of 1 second to 20 seconds.

9. The method of manufacturing a negative electrode of claim 7, wherein the step of applying the magnetic field is performed with a magnetic field strength in a range of 1,000 G to 7,000 G.

10. A lithium secondary battery comprising:

an electrode assembly including a positive electrode, a negative electrode according to claim 1, and a separator disposed between the positive electrode and the negative electrode; and
an electrolyte composition with which the electrode assembly is impregnated.

11. The lithium secondary battery of claim 10, wherein the positive electrode comprises a positive electrode active layer provided on at least one side of a positive electrode current collector and one or more types of lithium metal oxides represented by at least one of the following Chemical Formula 1 and Chemical Formula 2:

[Chemical formula 1] $\qquad Li_x[Ni_yCo_zMn_wM^1_v]O_2$

[Chemical formula 2] $\qquad LiM^2_pMn_{2-p}O_4$

wherein, in Chemical Formula 1 and Chemical Formula 2,

$M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,
$M^2$ is Ni, Co, or Fe.
p is $0.05 \leq p \leq 1.0$.

12. The lithium secondary battery of claim 11, wherein the positive electrode active layer comprises a positive electrode active material including one or more types of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.

13. The lithium secondary battery of claim 10, wherein the electrode assembly is a stack-type electrode assembly, a zigzag-type electrode assembly, or a zigzag-stack-type electrode assembly.

## INTERNATIONAL SEARCH REPORT

| | International application No. |
|---|---|
| | **PCT/KR2024/011507** |

### A. CLASSIFICATION OF SUBJECT MATTER

**H01M 4/133**(2010.01)i; **H01M 4/131**(2010.01)i; **H01M 4/1393**(2010.01)i; **H01M 4/1391**(2010.01)i; **H01M 4/587**(2010.01)i; **H01M 4/48**(2010.01)i; **H01M 4/38**(2006.01)i; **H01M 10/052**(2010.01)i; **H01M 10/0583**(2010.01)i; **H01M 10/0585**(2010.01)i

According to International Patent Classification (IPC) or to both national classification and IPC

### B. FIELDS SEARCHED

Minimum documentation searched (classification system followed by classification symbols)

H01M 4/133(2010.01); H01M 10/0525(2010.01); H01M 4/36(2006.01); H01M 4/58(2010.01); H01M 4/583(2010.01); H01M 50/249(2021.01); H01M 50/258(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 활물질(active material), 탄소(carbon, C), 규소(silicon, Si), X선-회절 (x-ray diffraction, XRD), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| A | KR 10-2544496 B1 (LG ENERGY SOLUTION, LTD.) 20 June 2023 (2023-06-20)<br>See claims 1, 3, 6 and 9-11. | 1-13 |
| A | CN 113036298 A (CONTEMPORARY AMPEREX TECHNOLOGY CO., LIMITED) 25 June 2021 (2021-06-25)<br>See claims 1, 3, 6 and 9. | 1-13 |
| A | JP 2022-530082 A (SAMSUNG SDI CO., LTD.) 27 June 2022 (2022-06-27)<br>See claims 1, 5 and 11-13. | 1-13 |
| A | KR 10-2023-0016790 A (SK ON CO., LTD.) 03 February 2023 (2023-02-03)<br>See claims 1, 3 and 5-7. | 1-13 |
| A | KR 10-2019-0033214 A (SK INNOVATION CO., LTD.) 29 March 2019 (2019-03-29)<br>See claims 1, 3 and 4. | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 November 2024** | **18 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2024/011507** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2544496 | B1 | 20 June 2023 | CN | 118541828 | A | 23 August 2024 |
| | | | | WO | 2024-136079 | A1 | 27 June 2024 |
| CN | 113036298 | A | 25 June 2021 | CN | 113036298 | B | 11 February 2022 |
| JP | 2022-530082 | A | 27 June 2022 | CN | 113728461 | A | 30 November 2021 |
| | | | | CN | 113728461 | B | 30 July 2024 |
| | | | | EP | 3961758 | A1 | 02 March 2022 |
| | | | | EP | 3961758 | B1 | 21 August 2024 |
| | | | | JP | 7246521 | B2 | 27 March 2023 |
| | | | | KR | 10-2020-0124513 | A | 03 November 2020 |
| | | | | KR | 10-2570570 | B1 | 23 August 2023 |
| | | | | US | 2022-0209217 | A1 | 30 June 2022 |
| | | | | WO | 2020-218773 | A1 | 29 October 2020 |
| KR | 10-2023-0016790 | A | 03 February 2023 | US | 2023-0038741 | A1 | 09 February 2023 |
| KR | 10-2019-0033214 | A | 29 March 2019 | KR | 10-2405902 | B1 | 08 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230105352